Europäisches Patentamt

European Patent Office

Office européen des brevets

(11) Veröffentlichungsnummer: **0 030 745**
A1

## (12) EUROPÄISCHE PATENTANMELDUNG

(21) Anmeldenummer: 80201024.9

(22) Anmeldetag: 29.10.80

(51) Int. Cl.³: **F 02 C 6/16**
B 65 G 5/00, E 21 F 17/16

(30) Priorität: 05.12.79 CH 10786/79

(43) Veröffentlichungstag der Anmeldung:
24.06.81 Patentblatt 81/25

(84) Benannte Vertragsstaaten:
CH DE FR GB LI SE

(71) Anmelder: BBC Brown, Boveri & Cie.
(Aktiengesellschaft)

CH-5401 Baden(CH)

(72) Erfinder: Schwarzenbach, Alfred, Dipl.-Ing
Weizenstrasse 5
CH-5430 Wettingen(CH)

(54) Gleichdruckluftspeicheranlage mit Wasservorlage für Gasturbinenkraftwerke.

(57) Gleichdruckluftspeicheranlage für Gasturbinenkraftwerke, mit einer Kaverne (1) und einer Wasservorlage (2-3), wobei zur Verhütung des Ausblasens des Kavernenwassers durch das Steigrohr (2) in letzterem eine servomotorbetätigte Regelklappe (18) vorgesehen ist, die bei Auftreten eines plötzlichen Druckabfalls in der Kaverne (1), der die Ausblasegefahr signalisiert, von einem Impulsgeber (13) gesteuert die Ausströmung aus der Kaverne (1) im erforderlichen Masse drosselt.

./...

Croydon Printing Company Ltd.

- 1 -

Gleichdruckluftspeicheranlage mit Wasservorlage für Gasturbinenkraftwerke

Die vorliegende Erfindung betrifft eine Gleichdruckluftspeicheranlage mit Wasservorlage für Gasturbinenkraftwerke
nach dem Oberbegriff des Patentanspruchs 1.

Gleichdruckluftspeicheranlagen für Gasturbinenkraftwerke
benötigen gegenüber gleich leistungsfähigen Luftspeicheranlagen mit variablem Luftdruck, der im Betrieb zwischen
gewissen Grenzen schwanken darf, nur etwa ein Drittel des
Volumens der letzteren. Dementsprechend sind der bauliche
Aufwand und die Erstellungskosten einer Kaverne für Gleichdruckspeicherung weit geringer als bei Kavernen für variablen Luftdruck.

Zur Konstanthaltung des Luftdruckes bei Gleichdruckspeicherung dient eine das in der Kaverne verbrauchte Luftvolumen
ausgleichende Wasservorlage mit einer Wassersäule, die in
ein freies, gewöhnlich an der Erdoberfläche liegendes Bassin
mündet und deren statische Druckhöhe dem in der Kaverne aufrechtzuerhaltenden Druck entspricht. Beim Laden der Kaverne,
die bei heutigen Anlagen in 600-800 m Tiefe liegt, entsprechend einem statischen Druck der Wassersäule von 60-80

- 2 -

bar, wird das Wasser in das Bassin hinaufgedrückt, beim Entladen läuft das Wasser aus dem Bassin in die Kaverne nach, um den gleichen Druck sicherzustellen.

Beim Betrieb von Luftspeichergasturbinenanlagen hat sich gezeigt, dass beim Laden der Kaverne die in der Wasservorlage aufsteigende Wassersäule die in ihr gelöste Luft freigibt, wodurch Luftblasen mit nach oben hin rasch zunehmendem Volumen entstehen, die eine Dichteabnahme in der Wassersäule und damit einen Druckabfall in der Kaverne bewirken. Im Extremfall könnte die Wassersäule vom Druckluftpolster ausgeblasen werden und die Kaverne sich somit vollständig entleeren.

Gegenüber der normalen Lösungsgeschwindigkeit von Luft in ruhendem Wasser erfolgt in der Kaverne die volle Sättigung infolge der starken Verwirbelung des Wassers bei den Lade- und Entladevorgängen rascher, da hierbei bald einmal alle Wasserteilchen mit der Luft in Berührung kommen. Die dabei vom Wasser aufgenommene Gewichtsmenge an Luft ist proportional dem Druck, der, wie gesagt, bei ausgeführten Anlagen zwischen 60 und 80 bar liegt. Ueber die dabei gelöste Luftmenge gibt folgender Vergleich Aufschluss:

Bei 1 bar Luftdruck und $10^{\circ}C$ Temperatur enthält 1 $m^3$ Wasser (= 1000 kg) 29,2 g Luft.

Bei 60 bar Druck und $10^{\circ}C$ Temperatur enthält 1 $m^3$ Wasser 1,7 kg Luft, also die etwa 58-fache Gewichtsmenge. Bei Atmosphärendruck entsprechen diese 1,7 kg Luft ca. 1,32 $m^3$. Ein von 60 bar Druck auf atmosphärischen Druck entspanntes

- 3 -

Wasser/Luft-Gemisch enthält also mehr Luft als Wasser.

Wenn derart mit Luft gesättigtes Wasser aus der Kaverne nach oben steigt, so wird durch den abnehmenden hydrostatischen Druck die Luft frei und bildet immer grössere Blasen. Die durchschnittliche Dichte der Wassersäule wird damit immer kleiner und der Druck in der Kaverne sinkt entsprechend. Dies kann, wenn nicht entsprechende Vorkehrungen getroffen werden, zum Ausblasen des Druckluftpolsters mit der Wassersäule führen.

Eine bisher bekanntgewordene Massnahme zur Verhütung dieses Ausblasens besteht darin, das die Wassersäule enthaltende Steigrohr in einem U-förmigen Bogen unter die Sohle der Kaverne hinab zu verlängern. Der tiefste Punkt des Steigrohrs muss dabei um mindestens 0,15 h unter dem jeweiligen Wasserspiegel in der Kaverne liegen, wobei h die wirksame Druckhöhe, d.h., die Differenz zwischen den geodätischen Höhen des Oberwasserspiegels im Ausgleichsbecken und des Kavernenwasserspiegels bedeutet.

Für h = 600 m würde dies bedeuten, dass das bereits 600 m lange Steigrohr noch um mindestens 90 m tiefer geführt werden müsste, und zwar doppelt, was einen untragbar hohen baulichen Mehraufwand darstellt.

Mit der vorliegenden, im kennzeichnenden Teil des Patentanspruchs 1 definierten Erfindung soll dieser schwerwiegende Nachteil vermieden werden.

Die Erfindung wird im folgenden unter Bezugnahme auf das in

- 4 -

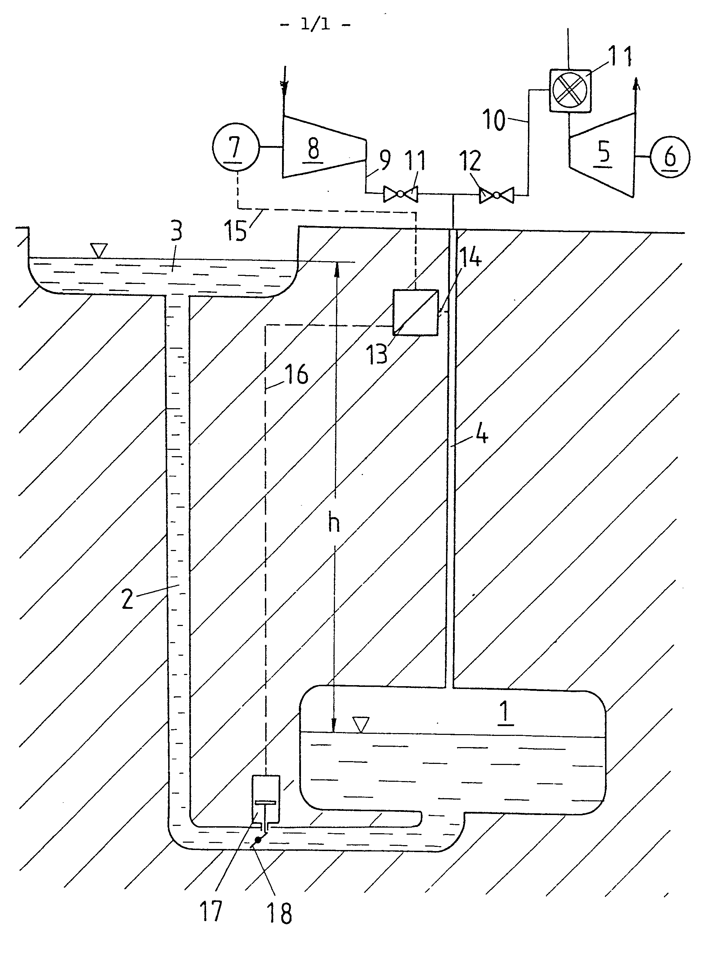

der Zeichnung dargestellte Ausführungsbeispiel näher beschrieben.

Bei der schematisch dargestellten Gleichdruckluftspeicheranlage befindet sich in der Sohle einer Kaverne 1 die Mündung eines Steigrohres 2, dessen oberer druckerzeugender
Teil mit der Höhe h zwischen den Wasserspiegeln der Kaverne
1 und eines Ausgleichsbeckens 3 senkrecht ausgebildet ist.
Das Steigrohr setzt sich nach unten in einem U-förmigen
Kanal fort, der die genannte Mündung an der Sohle der
Kaverne bildet. Um ein Ausblasen der Wassersäule und damit
der Kavernenluft infolge der eingangs beschriebenen Druckhöhenverminderung der Wassersäule zu vermeiden, müsste sich,
wie ebenfalls in der Einleitung erwähnt, dieser U-förmige
Kanal ohne die erfindungsgemässen Massnahmen um 0,15 h
unter den im Betrieb tiefsten zulässigen Kavernenwasserspiegel hinab erstrecken, was mit einer wesentlichen Erhöhung der Anlagekosten verbunden ist.

Aus dem Luftraum der Kaverne 1 führt eine Luftspeise- und
-entnahmeleitung 4 zu der übertage installierten Gasturbinenanlage, von der in der Zeichnung als Hauptteile die Gasturbine 5 zum Antrieb eines Elektrogenerators 6, ein von einem
Elektromotor 7 antreibbarer Luftverdichter 8 sowie die entsprechenden Luftzuleitungen 9 und 10 zwischen der Leitung
4 und dem Verdichter 8 bzw. der Brennkammer 10 und den zugehörigen Umschaltventilen 11 bzw. 12 dargestellt sind.

Der Erfindung liegt die Idee zugrunde, dass sich ein beginnendes Ausblasen beim Laden der Kaverne durch den Verdichter
durch eine rasche Drucksenkung, also einen negativen Druckgradienten, in der Kaverne bemerkbar macht. Es kann also das Auftreten eines negativen Druckgradienten in der Kaverne 1, bei dem die Gefahr des Ausblasens gegeben ist, zur Auslösung einer Massnahme benutzt werden, mit der das Ausströmen von Kavernenwasser in das Steigrohr 2 gebremst oder ganz unterbunden wird. Zu diesem Zwecke ist im oberen Teil der Anlage ein Impulsgeber 13 vorgesehen, der über eine Messleitung 14 mit der Luftleitung 4 verbunden ist. Der Impulsgeber 13 steht über eine Impulsleitung 15 mit dem Elektromotor 7 und über eine zweite Impulsleitung 16 mit einem Servomotor 17 zur Betätigung einer im unteren, waagrechten Teil des Steigrohres 2 untergebrachten Regelklappe 18 in Verbindung.

Der Impulsgeber hat zwei Schaltfunktionen: Wenn ihm während einer Ladeperiode durch die Messleitung 14 ein Druckabfall, d.h., ein negativer Druckgradient, mitgeteilt wird, so sendet er durch die Impulsleitung 16 ein Schliessignal an den Servomotor 17, der die bis anhin in ganz offener, d.h., waagrechter Stellung befindliche Regelklappe in eine teilweise oder ganz geschlossene Stellung dreht, je nach Stärke des dem Impulsgeber 13 über die Messleitung 14 mitgeteilten Druckgradienten. Damit wird die Ausströmung aus der Kaverne gedrosselt bzw. im Extremfall ganz unterbunden. Gleichzeitig muss dem Antriebsmotor 7 über die zweite Impulsleitung 15 ein Abschaltsignal mitgeteilt und dieser stillgesetzt werden. Mit Hilfe dieser Einrichtung kann also in der Kaverne durch Drosselung oder Absperrung der Ausgleichsströmung in das Steigrohr hinein vorübergehend ein höherer Druck gehalten werden als im Steigrohr und damit das Ausblasen verhindert werden.

Mittels einer dem Impulsgeber nachgeschalteten elektronischen
Programmsteuerung kann die Impulsfolge und die Schaltsequenz
für den Elektromotor 7 und den Servomotor 17 und der zeitliche Verlauf der Drosselung im Steigrohr dem Betriebsverhalten des Gasturbinenkraftwerks angepasst bzw. durch entsprechende Programmierung der Steuerung ein gewünschter
Betriebsverlauf realisiert werden.

Bezeichnungsliste

1       Kaverne

2       Steigrohr

3       Ausgleichsbecken

4       Luftspeise- und -entnahmeleitung

5       Gasturbine

6       Elektrogenerator

7       Elektromotor

8       Luftverdichter

9       Luftzuleitungen

10      Brennkammer

11      Umschaltventil

12      Umschaltventil

13      Impulsgeber

14      Messleitung

15      Impulsleitung

16      Impulsleitung

17      Servomotor

18      Regelklappe

h       Druckhöhe

- 7 -

Patentansprüche

1. Gleichdruckluftspeicheranlage mit Wasservorlage für Gasturbinenkraftwerke, in denen der Luftverdichter unabhängig von der Gasturbine durch einen Elektromotor antreibbar ist, mit einer unterirdischen Kaverne zur Speicherung der Druckluft und mit Verbindungsleitungen zwischen der Kaverne und dem Verdichter bzw. der Gasturbine, ferner mit einem Ausgleichsbecken und einem dasselbe mit der Kaverne verbindenden Steigrohr, gekennzeichnet durch Mittel (13, 14, 15, 16, 17, 18) zur Regelung des Durchflusswiderstandes im Steigrohr (2) gegen unbeabsichtigtes Ausströmen von Wasser aus der Kaverne (1) in Abhängigkeit vom zeitlichen Verlauf eines in der Kaverne auftretenden Druckabfalls.

2. Gleichdruckluftspeicheranlage nach Anspruch 1, dadurch gekennzeichnet, dass die Mittel zur Regelung des Durchflusswiderstandes einen über eine Messleitung (14) vom Kavernendruck beaufschlagbaren Impulsgeber (13), eine Regelklappe (18) im Steigrohr (2), einen Servomotor (17) zur Betätigung der Regelklappe (18) sowie Impulsleitungen (15, 16) zwischen dem Impulsgeber (13) und dem Elektromotor (7) zum Antrieb des Luftverdichters (8) bzw. zwischen dem Impulsgeber (13) und dem Servomotor (17)

aufweisen, die zur Uebertragung von Auslöseimpulsen vom Impulsgeber (13) zu einer Schalteinrichtung für den Elektromotor (8) und zum Servomotor (17) für die Regelklappe (18) dienen.

0030745

| Europäisches Patentamt | EUROPÄISCHER RECHERCHENBERICHT | Nummer der Anmeldung |
|---|---|---|
| | | EP 80 20 1024.9 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US – A – 4 117 684 (H.V. HENDRIX) <br><br> * Spalte 2, Zeile 17 bis Spalte 4, Zeile 35; Fig. 1, Positionen 20, 37 * <br><br> -- | 1,2 |
| | US – A – 3 895 493 (G.A. RIGOLLOT) <br><br> * Zusammenfassung * <br><br> -- | 1 |
| | US – A – 3 643 426 (I. JANELID) <br><br> * Spalte 2, Zeile 16 bis Zeile 33; Fig. 1, Positionen 17, 19 * <br><br> -- | |
| A | BROWN BOVERI MITTEILUNGEN, Band 62, Nr. 7/8, 1975 <br> O. WEBER "Das Luftspeicher-Gasturbinen-kraftwerk Huntorf" <br> Seiten 332 bis 337 <br> * Seite 336, rechte Spalte, zweiter Absatz bis Seite 337; Bild 5 * <br><br> -- | 1 |
| A | ENERGIETECHNIK, Band 25, Nr. 7, Juli 1975 <br> G. GÜTTER "Das "Pneumatische Druck-speicherwerk" – ein neuer Kraftwerkstyp zur Erzeugung elektrischer Spitzenenergie" <br> Seiten 327 bis 332 <br> * Seite 328, rechte Spalte, Absatz 2 bis Seite 329, linke Spalte, Absatz 1; Fig. 3 * <br><br> ---- | 1 |

### KLASSIFIKATION DER ANMELDUNG (Int. Cl.³)

F 02 C 6/16
B 65 G 5/00
E 21 F 17/16

### RECHERCHIERTE SACHGEBIETE (Int. Cl.³)

B 65 G 5/00
E 21 F 17/00
F 02 C 6/00
F 03 G 7/00
F 24 J 3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 19-02-1981 | STÖCKLE |